Europäisches Patentamt

**European Patent Office**

**Office européen des brevets**

(11) Publication number: **0 209 351**
A1

(12) # EUROPEAN PATENT APPLICATION

(21) Application number: **86305414.4**

(22) Date of filing: **14.07.86**

(51) Int. Cl.⁴: **G 01 T 1/00, G 01 T 1/15, G 01 T 7/12, G 04 G 9/00**

(30) Priority: **15.07.85 US 755008**

(43) Date of publication of application: **21.01.87**
**Bulletin 87/4**

(84) Designated Contracting States: **CH DE FR GB LI NL SE**

(71) Applicant: **PROGRESS EQUITIES INCORPORATED,**
**270 First Avenue South, St. Petersburg**
**Florida 33733 (US)**

(72) Inventor: **Schneider, Richard T., 3550 N.W. 33rd Place,**
**Gainesville Florida 32605 (US)**
Inventor: **Spake, Ned B., 2711 Summerfield Road, Winter**
**Park Florida 32792 (US)**

(74) Representative: **Haggart, John Pawson et al, Page,**
**White & Farrer 5 Plough Place New Fetter Lane, London**
**EC4A 1HY (GB)**

(54) **Electronic timepiece having a radiation dose rate meter.**

(57) A combination radiation dose rate meter (24, 26, 36) and electronic timepiece (2 to 16) is disclosed which provides a convenient dose rate monitoring device which will be worn by an individual substantially at all times. The dose rate meter includes an alarm (20, 22) which generates a signal when an excessives dose rate is encountered or when the dose rate meter (24, 26, 36) malfunctions. Different alarms may be generated in response to the different warning conditions so that the exact warning condition can be readily ascertained. A switched power supply (28, 30) to the radiation detector reduces overall battery drain.

EP 0 209 351 A1

ACTORUM AG

## ELECTRONIC TIMEPIECE HAVING A RADIATION DOSE RATE METER

The present invention relates to a personal radiation dose rate meter which will be worn by an individual at all times and which will immediately warn the individual of imminent danger from exposure to a radiation dose rate above a safe level.

Various miniature radiation detectors have been developed in the prior art which can be worn by individuals in areas in which there is a high likelihood of exposure to radiation. For example, workers in nuclear reactors are often issued a pocket radiation detector which measures the amount of radiation to which they are exposed. Detectors of this type generally produce a visual or audible output when the worker has been exposed to a predetermined radiation dose. Other detectors measure the radiation dose rate that a worker is exposed to so that a proper warning may be issued before a dangerous dose has accumulated over a period of time.

Examples of various detectors are disclosed, for instance, in various issued U.S. patents. Typical dosimeters and dose rate meters using various radiation responsive elements are shown in U.S. Patent No. 3,878,496 to Erickson, U.S. Patent No. 4,197,461 to Umbarger et al, U.S. Patent No. 4,320,393 to Engdahl, and U.S. Patent No. 4,415,237 to Fox.

U.S. Patent No. 3,878,496 discloses a dosimeter which provides an audible alarm when a preset radiation dose is accumulated or when the dose rate exceeds a safe level. This patent uses a Geiger-Mueller ionization tube to produce a pulse train in response to radiation. A counting circuit counts the individual pulses in the pulse train to give an indication of the incident radiation. U.S. Patents Nos. 4,197,461 and 4,415,237 disclose radiation detectors wherein a cadmium telluride (CdTe) crystal is used to provide a signal which is a function of the amount of incident gamma radiation. U.S. Patent No. 4,320,393 uses a detector such as an electret which provides a signal that causes an alarm to be generated when a threshold radiation dose is reached.

These detectors, however, are normally only worn by individuals who enter areas of suspected danger. Typically they are placed in the user's pocket or clipped to the clothing before entering a high-risk area. Accordingly, they are rarely worn by members of the general public in areas where an unsafe exposure to radiation typically would not be suspected. Even if the detectors are available to individuals in normally safe areas, they generally would not be worn since the detector entails a separate item which would usually not be worn by an individual.

Advances in modern technology have increased the number of fields in which radioactive materials are used. Accompanying this increased use, however, is an increase in the susceptibility of individuals to unsuspected exposure to radiation as a result of accidental spills of radioactive liquids or gases or radioactivity released by industrial accidents or equipment failure. Such accidents might occur, for example, at certain medical facilities, research laboratories, weapons manufacturing plants, military installations, and the like.

One example of a recent occurrence in which unsuspecting individuals were exposed to radiation occurred when radioactive steel was accidently used by a manufacturer to produce bed frames. A person sleeping in a bed having a radioactive frame might accumulate a substantial dose of radiation over a period of time, leading to health and other related problems.

Another incidence in which it would be necessary for an individual to have a dose rate meter readily available would be in the event of a nuclear attack. The dose rate meter would permit a person to determine whether he is in a high radiation zone, thereby allowing him the opportunity to escape the danger zone and immediately seek an area of relatively low contamination.

One problem which would arise with radiation dose rate meters that are used in areas where there is not a high likelihood of dangerous exposure is that extended periods of time might pass before there is a need for the meter. Therefore, the user would have little reason to become suspicious if an extended period passed without a high radiation does rate recording being detected by the dose rate meter. However, over the course of the extended period, several factors could affect the meter's capability of responding properly to a high dose rate. Hence, it would be difficult to determine whether the lack of a high reading results from a lack of exposure to high radiation levels or from a malfunction of the device.

Previous attempts have been made to ensure proper operation of a dosimeter. U.S. Patent No. 3,878,496 provides a test oscillator to check for the proper operation of the dosimeter. In U.S. Patent No. 4,320,393, a time-measuring device is used to generate an alarm indicating that the primary battery should be changed, thus ensuring that the charge on the primary battery is sufficient for reliable operation. Both of these techniques, however include inherent drawbacks including the necessity of providing extra elements not used in the detector itself, thus increasing the size, cost and complexity of the device.

Accordingly, it is an object of the present invention to provide a portable dose rate meter which will normally be carried by an individual in both suspected and unsuspected danger areas to provide an indication that the individual is being exposed to high rates of radiation.

It is a further object of the present invention to provide a personal dose rate meter which continuously monitors its own operation to ensure that the meter is functioning properly.

It is another object of the present invention to provide a relatively simple and inexpensively fabricated apparatus for providing reliable radiation dose rate monitoring which will normally be conveniently carried on an individual at all times.

According to the present invention, an electronic timepiece and radiation dose rate meter comprises:

means for generating a constant frequency reference pulse train;

frequency dividing means for counting a predetermined number of pulses from said pulse train, thereby to provide an output pulse which indicates the lapse of a set period of time;

a processing unit for monitoring the output of said frequency dividing means and producing a time-indication signal;

a display which receives said time-indication signal and provides a visual display of the time of day;

dose rate monitoring means for generating a signal indicating the radiation dose rate to which the electronic timepiece is exposed, said processing unit periodically monitoring said dose rate signal and comparing said dose rate signal against an upper threshold level and a lower threshold level, said upper threshold level corresponding to a maximum safe level of radiation exposure and said lower threshold corresponding to a natural background radiation level; and

alarm means for providing a signal when said dose rate signal exceeds said upper threshold level, thereby providing an indication of an unsafe radiation dose rate, or when said dose rate signal is lower than said lower threshold level, thereby providing an indication of an improperly functioning dose rate meter.

A dose rate meter is thus combined with an electronic timepiece such as a wrist watch to provide a convenient dose rate monitoring device which will be worn by an individual in areas of unsuspected danger as well as in areas of suspected danger. A substantial portion of the circuitry normally employed by an electronic timepiece can be used in a manner in which it was not intended in order to monitor the radiation dose rate and periodically display the dose rate measurements on a conventional timepiece display.

In a preferred embodiment of the invention a radiation sensitive device produces an analog output which is proportional to the radiation dose rate. This analog output is then amplified, converted to a digital signal by an analog/digital converter and input into the timepiece circuitry. The timepiece circuitry, which normally measures time and displays the time of day, also periodically displays the dose rate measurement. The dose rate measurement is compared against the upper and lower threshold values. If the measurement exceeds the upper threshold value, then an alarm is triggered indicating that the wearer is being exposed to a radiation dose rate above an acceptable level. The lower threshold corresponds to the level of radiation which can be attributed to natural radiation sources such as the sun and the earth itself. A dose rate measurement lower than the natural background radiation level indicates that the detector is malfunctioning. Thus, an alarm is generated to alert the wearer of the malfunction. Preferably, different alarms are generated by the different tests so that the wearer can readily determine exactly which condition he is being alerted to. The timepiece may also be provided with manual input means so that the wearer can display the dose rate measurement at will. In order to preserve the charge on the device batteries, the radiation detector can be operated only periodically so that there is no constant drain on the device batteries by the detector.

The features and advantages of the present invention will become apparent from the following detailed description of the preferred embodiment when read in connection with the accompanying drawing, in which:

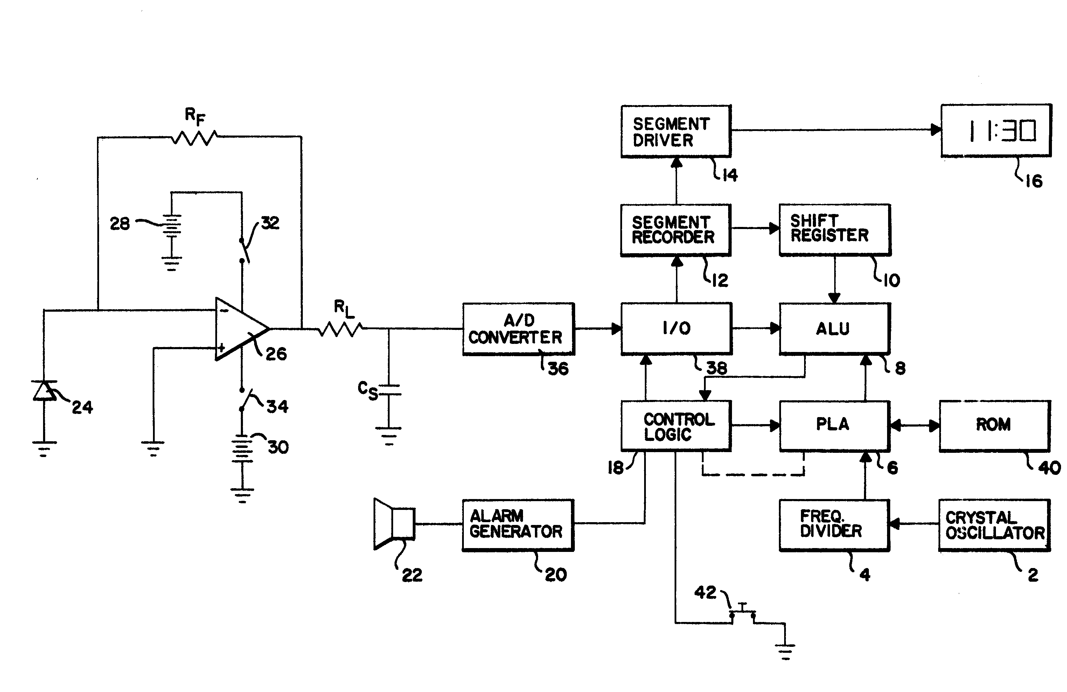

Figure 1 is a schematic circuit diagram showing an illustrative embodiment of the present invention.

A preferred embodiment of the present invention will be described with reference to the embodiment of Figure 1. It should be understood, however, that the embodiment of that Figure is merely illustrative, and that various modifications will be apparent to one skilled in the art.

Referring to Figure 1, the time measurement function of the present invention is performed in a conventional manner. In its simplest form, the crystal oscillator 2 generates a square-wave pulse train having a constant frequency of, for example, 10 MHz. The frequency pulse train is reduced by the frequency divider 4 to, for example, 10 Hz, and the reduced frequency pulse train is input into the programmable logic array (PLA) 6. The PLA 6 generates a binary "1" in response to a pulse from the frequency divider 4, and sends it, along with the address of the segment driver, to the arithmetic logic unit (ALU) 8.

A value representing the current time of day is stored in the shift register 10. When the PLA 6 generates a binary "1", the ALU 8 increments the value stored in the shift register 10, and sends the incremented value to the segment recorder 12 which, in turn, sends it to the segment driver 14 to update the LCD display 16. As is known in the art, the device can also be programmed to display the date and similar information. Additional functions such as a stopwatch can also be added.

The control logic 18 maintains proper timing between the various elements and generates control signals to activate selected features. For example, if the watch is provided with a wake-up alarm feature, the ALU 8 will send a pulse to the control logic 18 when the set time is detected. The control logic 18 will then generate a control signal which will cause the alarm generator 20 to produce an audible signal on the speaker 22.

As shown, the present invention also includes a radiation detector 24 which provides an output that is proportional to the incident radiation dose rate. Preferably, the detector 24 is a cadmium tungstate ($CdWO_4$) scintillator crystal such as a Harshaw-Filtrol X-4802 which is cemented to a photodiode such as a Hammamatsu S-1337-16-BR or other light responsive device. The photodiode responds to the scintillation of the $CdWO_4$ crystal caused by incident radiation to produce an analog voltage signal proportional to the incident radiation dose rate. Alternatively, other detector devices such as a radiation-responsive semiconductor could be substituted for the scintillator/photodiode detector.

It should be pointed out that the cadmium tungstate detector is quite sensitive to gamma radiation, but is less sensitive to neutron, alpha, and beta radiation. However, for the present purpose the sensitivity to gamma radiation is sufficient. Neutron radiation would be high, for example, during a nuclear explosion, but would not be prominent thereafter. Consequently, it is of a lesser importance. Alpha radiation and beta radiation are more common, but are considerably less penetrant than neutron or gamma radiation. An individual's clothing will generally provide ample shielding from alpha and beta radiation. Alpha and beta radiation would usually be dangerous only when radioactive dust is inhaled. However, many alpha and beta decays are accompanied by gamma emissions, thus detection of gamma rays usually also provides a warning against alpha and beta radiation. If a particular application requires detection of another type of radiation, the cadmium tungstate detector could be replaced with a detector which is sensitive to that particular type of radiation.

The output signal from the detector 24 is input into the inverting input terminal of the operational amplifier 26, which is connected with feedback resistor $R_F$ and load resistor $R_L$ in a conventional manner. The non-inverting input terminal is grounded to a reference potential terminal. The operational amplifier is powered by batteries 28 and 30 which are connected with the amplifier power terminals through switches 32 and 34, respectively. The switches 32 and 34 are ganged and are controlled to periodically disconnect the amplifier 26 from the power supply. Thus, the amplifier 26 only operates during the period during which switches 32 and 34 are closed, thereby reducing the overall drain on the batteries and prolonging battery life. It should be noted that separate batteries 28 and 30 are shown for the sake of simplicity but, in actuality, an appropriately connected single battery could also be used.

The output of the amplifier 26 is smoothed by the smoothing capacitor $C_S$ and supplied to the analog/digital converter 36. The analog/digital converter 36 generates a train of pulses representing the digital value corresponding to the value of the amplified signal from the detector 24, and inputs the digital value into the input/output unit 38.

Once the dose rate reading enters the I/O unit 38, it is stored in a buffer until the control logic 18 provides a signal which inhibits the flow of time display information and causes the I/O unit to load the contents of the buffer into the segment recorder 12. The dose rate reading can then be displayed on the display 16 by the segment driver 14.

The contents of the buffer of the I/O unit 38 are also input into the ALU 8 which performs two comparisons. The first comparison tests the dose reading against a first, relatively low, threshold value. The first threshold is set to a value corresponding to the natural background level of ionizing radiation from natural sources such as the sun.  The natural background level provides a base radiation level which should always be present and, thus, should always cause at least a base level dose rate reading from the detector circuit.  Therefore, if the reading from the detector falls below this set base level, a reliable presumption can be made that the detector circuit is not functioning properly.  An alarm control signal is generated by the control logic 18 to actuate the alarm generator 20 in order to alert the wearer to the improperly functioning detector circuit.

The dose rate reading is also compared against a second, relatively high, threshold value which is set to a value corresponding to the maximum acceptable dose rate.  If the dose rate reading exceeds the second threshold, then the control logic 18 activates the alarm generator 20 to inform the user of the presence of the high radiation dose rate.

The alarm generator preferably generates different alarms in response to the different alert conditions.  For example, periodic pulses of a low frequency alarm could be generated in response to the malfunctioning detector, and a continuous high frequency alarm could be generated in response to the immediate danger posed by the high dose rate.  The different warning signals can be burnt into the ROM 40 and retrieved in accordance with which alarm is to be generated.  If the watch is provided with a wake-up alarm, a third alarm signal will be stored in the ROM 40.  Typically, as many as 60 different warning signals can be burnt into the ROM 40.  The provision of as many as 60 warning signals permits different signals to be given in response to various levels of dangerous radiation dose rates.  For example, a reading substantially above the second threshold could generate a higher pitch warning signal than a reading only slightly above the second threshold, thereby audibly indicating to the individual that immediate evacuation is necessary.  In addition to, or rather than, the audible alarm, a visual alarm could also be given by, for example, lighting a LED.

Since it is only necessary to monitor the dose rate detector periodically, the I/O unit 38 is only enabled during the monitor period.  During the monitor period, the control logic 18 sends a read-enable signal to the I/O unit 38 so that the output of the A/D converter 36 is loaded into the I/O unit buffer.

As mentioned earlier, the switches 32 and 34 operate to cut-off the power supply to the amplifier 26 when a reading is not being taken. However, during the monitor period, the control logic 18 generates a signal which causes the switches 32 and 34 to close and provide the necessary power to the amplifier 26. For instance, the switches 32 and 34 can be transistors having a gate controlled by the control logic 18. In the event that a single battery is used to power the amplifier 26, it would be possible to replace the two switches 32 and 34 with a single switch to disconnect the power source.

Typically, there would be some delay between the instant when power is connected to the amplifier and when a valid output is available from the A/D converter 36. A large portion of the delay would be due to the time that it takes the A/D converter 36 to convert the analog output of the amplifier 26. In order to ensure a sufficient amount of time to obtain a valid dose rate measurement, the read-enable signal and the time-display inhibit signal from the control logic 18 will be generated slightly after the switching control signals.

The monitor period can be initiated either automatically or manually. When initiated manually, a push button 42 is depressed to ground a normally high control line input to the control logic 18. Conversely, the push button could be connected to a power source to place a high signal on a normally low control line. The change of state on the control line input causes the control logic 18 to initiate the monitor period by closing the switches 32 and 34 and generating the I/O unit read-enable signal and the time-display inhibit signal.

In the automatic mode, the PLA 6 is programmed to periodically change the state of control input to the control logic 18. Preferably, the line controlled by the PLA 6 is the same as the line controlled by the push button 42. Thus, parallel devices are provided for initiating the monitor period. The control line could be hard wired directly to the PLA 6, or the connection can be simulated by properly controlling the ALU 8.

Using the example given earlier, wherein the frequency divider 4 delivered a 10 Hz square-wave signal to the PLA 6, the PLA 6 could be programmed to initiate the monitor period once every 60 seconds. This would be achieved simply by having the PLA 6 count the number of pulses from the frequency divider 4. Once a total of 600 pulses are counted, the PLA 6 causes the control line to change state, and the count is reinitiated.

The present invention therefore provides a radiation dose rate meter that also performs the dual function of a timepiece. The dose rate meter is conveniently carried at all times by an individual to provide warnings in unsuspected danger zones as well as in suspected danger zones. The operability of the detector is contrinually monitored to ensure safety at all times. Various warning signals are generated in response to different alert conditions. Power is saved by using a switched power supply to the radiation detector amplifier.

The principles, preferred embodiments and modes of operation of the present invention have been described in the foregoing specification. The invention which is intended to be protected herein, however, is not to be construed as being limited to the particular forms disclosed, since these are to be regarded as illustrative rather than restrictive. Variations and changes may be made by those skilled in the art without departing from the spirit of the invention.

Claims

1. An electronic timepiece and radiation dose rate meter, characterised in that it comprises:

means (2) for generating a constant frequency reference pulse train;

frequency dividing means (4) for counting a predetermined number of pulses from said pulse train, thereby to provide an output pulse which indicates the lapse of a set period of time;

a processing unit (6, 8, 10, 12, 14, 18, 38) for monitoring the output of said frequency dividing means (4) and producing a time-indication signal;

a display (16) which receives said time-indication signal and provides a visual display of the time of day;

dose rate monitoring means (24, 26, 36) for generating a signal indicating the radiation dose rate to which the electronic timepiece is exposed, said processing unit periodically monitoring said dose rate signal and comparing said dose rate signal against an upper threshold level and a lower threshold level, said upper threshold level corresponding to a maximum safe level of radiation exposure and said lower threshold corresponding to a natural background radiation level; and

alarm means (20, 22) for providing a signal when said dose rate signal exceeds said upper threshold level, thereby providing an indication of an unsafe radiation dose rate, or when said dose rate signal is lower than said lower threshold level, thereby providing an indication of an improperly functioning dose rate meter.

2. The apparatus of claim 1, characterised in that said processing unit includes a programmable digital signal processor (6, 8) and said dose rate monitoring means includes an analog/digital converter (36) which produces a digital output representing said analog dose-rate voltage signal, said digital signal processor programmed to compare said digital output with first and second stored values representing said upper and lower thresholds, respectively.

0209351

3.     The apparatus of claim 2, characterised in that said dose rate measuring means includes a radiation respsonsive detector (24) to provide an analog output signal proportional to the radiation dose rate and an amplifier (26) to provide an analog dose-rate voltage signal proportional to said detector output signal.

4.     The apparatus of claim 3, characterised in that said dose rate measuring means further includes a switched power supply (28, 30) to said amplifier (26), said amplifier being supplied with power only during the period in which said processing unit monitors said dose rate signal, thereby to reduce the overall total drain on the power supply.

5.     The apparatus of claim 4, characterised in that said radiation responsive detector (24) includes a radiation responsive scintillator and a photoelement responsive to said scintillator.

6.     The apparatus of claim 4, characterised in that said radiation responsive detector (24) includes a radiation responsive semiconductor.

7.     The apparatus of claim 1, characterised in that said processing unit (6, 8, 10, 12, 14, 18, 38) includes means responsive to a control signal for inhibiting said time of day display (16) and displaying on said display the value of said radiation dose rate signal.

8.     The apparatus of claim 7, characterised in that said control signal is generated internally by said processing unit periodically in response to a predetermined number of pulses from said frequency dividing means (4).

9.     The apparatus of claim 8, characterised in that said dose rate measuring means includes a radiation responsive detector (24) to provide an analog output signal proportional to the radiation dose rate, and an amplifier (26) to provide an analog dose rate voltage signal proportional to said analog output signal; said amplifier having a switched power supply (28, 30) operated in response to said control signal from said processing unit to supply power to said amplifier only during the period in which said processing unit monitors said dose rate singnal, thereby to reduce the overall total drain on the power supply.

10. The apparatus of claim 9, characterised in that said control signal is also generated in response to a manual input (42).

11. The apparatus of claim 7, characterised in that said control signal is generated in response to a manual input (42).

12. The apparatus of claim 1, characterised in that a first audible alarm is generated in response to a dose rate signal higher than said upper threshold level, and a second, different, audible alarm is generated in response to a dose rate signal lower than said lower threshold level.

13. An electronic timepiece and radiation dose rate meter, characterised in that it comprises:

means (2) for generating a constant frequency reference pulse train;

frequency dividing means (4) for counting a predetermined number of pulses from said pulse train, thereby to provide an output pulse which indicates the lapse of a set period of time;

a processing unit (6, 8, 10, 12, 14, 18, 38) for monitoring the output of said frequency dividing means (4) and producing a time-indication signal;

a display (16) which receives said time-indication signal and provides a visual display of the time of day;

dose rate monitoring means (24, 26, 36) for generating a signal indicating the radiation dose rate to which the electronic timepiece is exposed, said processing unit periodically monitoring said dose rate signal and comparing said dose rate signal against a threshold level; and

alarm means (20, 22) for selectively providing a signal in response to said comparison between said dose rate signal and said threshold level.

14. The apparatus of claim 13, characterised in that said dose rate measuring means includes a radiation responsive detector (24) to provide an analog output signal proportional to the radiation dose rate, and an amplifier (26) to provide an analog dose rate voltage signal proportional to said analog output signal; said amplifier having a switched power supply (28, 30) operated in response to said control signal from said processing unit to supply power to said amplifier only during the period in which said processing unit monitors said dose rate signal, thereby to reduce the overall total drain on the power supply.

15. The apparatus of claim 13, characterised in that said processing unit includes means responsive to a control signal for inhibiting said time of day display and displaying on said display the value of said radiation dose rate signal.

16. The apparatus of claim 15, characterised in that said control signal is generated internally by said processing unit periodically in response to a predetermined number of pulses from said frequency dividing means.

SEGMENT DRIVER 14

11:30 16

R_F

28

32

SEGMENT RECORDER 12

SHIFT REGISTER 10

R_L

A/D CONVERTER 36

I/O

ALU 8

26

24

C_S

34

30

38

CONTROL LOGIC 18

PLA 6

ROM 40

ALARM GENERATOR 20

22

FREQ. DIVIDER 4

CRYSTAL OSCILLATOR 2

42

0209351

European Patent
Office

**EUROPEAN SEARCH REPORT**

0209351

Application number

EP 86 30 5414

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | IEEE NUCLEAR SCIENCE, vol. NS-29, no. 1, February 1982, pages 773,773, IEEE, New York, US; M.A. WOLF et al.: "A new tiny computerized radiation dosimeter" * Whole document * | 1,3,6-8,10-13,15,16 | G 01 T 1/00 G 01 T 1/15 G 01 T 7/12 G 04 G 9/00 |
| Y | US-A-4 301 367 (HSU) * Abstract; column 1, line 43 - column 2, line 28; figure 1 * | 1,3,6,12,13 | |
| A | US-A-3 807 388 (ORR et al.) * Abstract; column 2, line 51 - column 3, line 56; figure 5 * | 1,4,7,8,10,11,13,15,16 | |

TECHNICAL FIELDS SEARCHED (Int. Cl.4)

G 01 T
G 04 G

The present search report has been drawn up for all claims

| Place of search | Date of completion of the search | Examiner |
|---|---|---|
| THE HAGUE | 23-09-1986 | DATTA S. |